# EUROPEAN PATENT SPECIFICATION

(11) **EP 2 645 288 B1**
(45) Date of publication and mention of the grant of the patent: **13.07.2016**
(21) Application number: 13275072.0
(22) Date of filing: 20.03.2013
(51) Int. Cl.: G06F 21/31, G06F 21/57, G06F 21/79

(54) **Encryption system and method of encrypting a device**
Verschlüsselungssystem und Verfahren zur Verschlüsselung einer Vorrichtung
Système de chiffrement et procédé de chiffrement d'un dispositif

(30) Priority: 21.03.2012 GB 201204950
(43) Date of publication of application: 02.10.2013
(73) Proprietor: Becrypt Limited, London WC2E 9RA (GB)
(72) Inventor: Parsons, Bernard, London, Greater London WC2E 9RA (GB); Lee, Nigel, London, Greater London WC2E 9RA (GB); Holloway, David, London, Greater London WC2E 9RA (GB)
(74) Representative: Exell, Jonathan Mark

(56) References cited:
- EP-A1- 2 256 656
- US-A1- 2003 107 600
- US-A1- 2007 282 757
- US-A1- 2009 319 806
- US-A1- 2011 314 279
- Karen Scarfone ET AL: "Special Publication 800-111 Guide to Storage Encryption Technologies for End User Devices Recommendations of the National Institute of Standards and Technology", , 1 November 2007 (2007-11-01), XP055084258, Retrieved from the Internet: URL:http://hipaa-encryption.com/PDF/Guide to Storage Encryption-SP800-111.pdf [retrieved on 2013-10-16]
- Brian Kaplan ET AL: "RAM is Key Extracting Disk Encryption Keys From Volatile Memory", , 31 May 2007 (2007-05-31), XP055084756, Carnegie Mellon University Retrieved from the Internet: URL:http://cryptome.org/0003/RAMisKey.pdf [retrieved on 2013-10-21]

## Description

### Field of the Invention

The present invention relates to encryption systems that are particularly applicable to devices having an operating system stored in a non-volatile memory.

### Background to the Invention

Many mobile devices such as tablets and smart phones, as well as embedded devices, make use of an operating system stored within non-volatile memory, such as Flash memory.

Increasingly, it is becoming seen as good practice to encrypt mobile or embedded devices that contain even vaguely sensitive information. Indeed, loss of data is seen as being very bad from both publicity and a legal perspectives (particularly with regard to data protection legislation) and many companies are only slowly becoming aware of how vulnerable the data is that their employees are carrying around on tablets etc.

While a password protected boot sequence or lock screen is better than nothing on such devices, it does not stop a determined attacker. Generally, it is desirable for the data itself to be encrypted.

Common approaches to implementing encryption on such devices require that part of the operating system remains un-encrypted. The un-encrypted portion of the operating system is loaded by a bootloader during the boot process and executes prior to user authentication being performed. Successful user authentication allows an encryption key to be recovered and the encrypted portion of the operating system can then be loaded. This approach typically simplifies the engineering task, as components of the operating system are available to undertake user authentication tasks, including interacting with device specific hardware such as a touch screen device. However the approach has a significant disadvantage from a security perspective, as a portion of the operating system is still unencrypted. In such a situation, an attacker could tamper with the unencrypted portion of the operating system, potentially by exploiting a known vulnerability within the system, allowing user credentials to be subsequently captured and rendering the entire system vulnerable.

In order to avoid security exploits, it is desirable that the whole operating system of such devices is encrypted.

During start-up of a general purpose PC, a series of steps are performed, commonly in the following order:
a) When the PC is powered up, the Basic Input Output System (BIOS) is executed. The BIOS is typically firmware stored in read only memory, ROM, of the PC;
b) The BIOS may perform steps such as a power-on-self-test (POST) to check memory and other hardware components of the PC, it may also offer the user access to a setup menu to set hardware parameters;
c) A bootloader is then executed. In general purpose PCs, the bootloader is typically a relatively small program stored in ROM, along with the bare minimum of data needed to access the non-volatile devices from which the operating system programs and data may be loaded into RAM. Bootloaders may chain load functionality such that the initial code executed is simple but each step in the chain causes more complex functionality to the loaded.

The approach used in conventional disk-based computer systems for whole operating system encryption is to introduce a pre-operating system that utilises interrupts in the computer system's BIOS during bootloader execution. The preoperating system facilitates authentication and key recovery in an environment that is separate to the encrypted operating system. Once the key has been recovered, all BIOS level input and output operations (to which higher level disk I/O are eventually decomposed into) are intercepted by a driver, such that encryption and decryption operations are appropriately included for disk access. In this manner, the disk holding the operating system can be fully encrypted. Only if authentication by the pre-operating system is successful is key recovery possible and as a result, access of the encrypted disk (both operating system and data) is only possible upon authentication.

Clearly, this significantly increases security as the authentication components are separated from the data and operating system. Even if the authentication system becomes compromised and an exploit is found to access the memory or disk on which it is stored, the data and operating system are encrypted and held elsewhere.

While whole disk encryption is well established in general purpose PCs such as desktops and laptops, many mobile device types do not lend themselves well to encryption and particularly not to that of the whole operating system. For example, mobile devices that make use of non-volatile Flash memory for operating system storage typically do not have BIOS interrupts that may be used to facilitate pre-operating system encryption. This is in contrast to encryption products designed for disk based systems that typically use BIOS interrupts or a similar mechanism, to intercept disk activity.

Unlike in general purpose PCs, in mobile devices the bootloader is often specific to the hardware configuration of the device. This is because it is required to perform specific hardware initiation tasks before the operating system is loaded. The bootloader component typically resides in non-volatile memory, and is effectively a component of the system's firmware.

In the case of flash-based systems, the approach taken to whole disk encryption in general purpose PCs is not possible due to architecture differences. In particular, within the typical architecture of flash-based devices, the initial operating system loader does not have hardware interrupts available for flash memory access. This prevents the same approach being taken for input and output interception using the driver model. Furthermore, the operating system is typically interconnected with the lower level functions in flash based systems. As a result, separation of the two so as to encrypt one but not the other is not straightforward. For example, if the non-volatile memory including the firmware is encrypted then the hardware functionality such as a touch screen interface would not be accessible to the pre-operating system environment as it would be implemented in the firmware. Consequently, there would be no input mechanism available to provide the pre-operating system environment.

The document "Special Publication 800-111 Guide to Storage Encryption Technologies for End User Devices Recommendations of the National Institute of Standards and Technology" by Karen Scarfone et al, XP055084258, http://hipaa-encryption.com/PDF/Guide to Storage Encryption-SP800-111.pdf discusses encryption technologies for end user devices. US2007282757 discloses a method for logon and machine unlocking. US20038107600 discloses a system for providing a user input interface prior to initiation of an operating system. EP2256656 discloses a method and system for key management to protect encrypted data of an endpoint computing device. US2011/314279 discloses single-use authentication methods for accessing encrypted data. US2009319806 discloses a method for extensible pre-boot authentication. The document: "RAM is Key Extracting Disk Encryption Keys From Volatile Memory" by Brian Kaplan et al, XP055084756, http://cryptome.org/0003/RAMisKey.pdf discusses forensic techniques for analysis of with encrypted data.

### Statement of the Invention

According to an aspect of the present invention, there is provided an encryption system as claimed in claim 1. According to another aspect of the present invention, there is provided a method as claimed in claim 12.

In one embodiment, the encryption system includes computer program code executable by a processor of the computing device to operate the encrypted operating system on the computing device, including:
computer program code executable by the processor to provide a preoperating system; and,
encrypted computer program code executable by the processor, when decrypted, to operate a start-up module,
wherein the pre-operating system is executable by the processor on start-up of the computing device and is configured to receive user inputs for authenticating the user, the pre-operating system including computer program code executable by the processor for authenticating the user in dependence on the user inputs and, upon authentication, for block-decrypting the encrypted start-up module into volatile memory for booting of the encrypted operating system on the computing device.

The decrypted start-up module may include computer program code executable by the processor to provide a filter for encryption and decryption of read and write operations between the computing device and the encrypted operating system.

The filter may comprise one or more kernel mode filter drivers executable by the processor transparently to the user and the operating system.

The encryption system may be encoded in a non-volatile memory of the computing device. The encrypted operating system may be encoded in a non-volatile memory of the computing device. The encryption system and encrypted operating system may be encoded in a common non-volatile memory. The non-volatile memory/memories may be flash memory/memories.

Preferably, the pre-operating system includes computer program code executable by the processor to perform said block decryption as a contiguous operation.

Preferably, the pre-operating system includes computer program code executable by the processor to block decrypt and chain-load the encrypted start-up module as a contiguous operation

The pre-operating system may include computer program code executable by the processor to communicate, independently of said operating system, with a touch screen of the computer system to receive one or more of said user inputs for authenticating the user.

The pre-operating system may include computer program code executable by the processor to receive user inputs on user credentials and to obtain an encryption key in dependence on said user credentials for decrypting the encrypted operating system.

The computer system preferably includes an encryption key store in a non-volatile memory, the encryption key store securely encoding said encryption key and being accessible to said pre-operating system in dependence on said user credentials.

According to another aspect of the present invention, there is provided a method of encrypting an operating system of a computing device having non-volatile memory and a volatile memory, the method comprising:
writing a pre-operating system environment including a non-encrypted authentication module and an encrypted start-up module, the non-encrypted authentication module being executable by a processor of the computing device to receive user inputs for authenticating the user, to authenticate the user in dependence on the user inputs and, upon authentication, block-decrypt the encrypted start-up module into volatile memory of the computing device for execution;
encrypting the operating system in dependence on an encryption key and writing the encrypted operating system to the non-volatile memory;
configuring the computing device to execute the authentication module on start-up of the computing device, wherein upon execution in volatile memory, the start-up module provides a filter driver for encryption and decryption of read and write operations for the encrypted operating system.

In one embodiment, a method of encrypting an operating system of a computing device having non-volatile memory and a volatile memory comprises:
writing a pre-operating system environment including a non-encrypted authentication module and an encrypted start-up module, the non-encrypted authentication module being executable by a processor of the computing device to receive user inputs for authenticating the user, to authenticate the user in dependence on the user inputs and, upon authentication, block-decrypt the encrypted start-up module into volatile memory of the computing device for execution;
encrypting the operating system in dependence on an encryption key and writing the encrypted operating system to the non-volatile memory; and,
configuring the computing device to execute the authentication module on start-up of the computing device, wherein upon execution in volatile memory, the start-up module provides a filter driver for encryption and decryption of read and write operations for the encrypted operating system.

The method may further comprise interrogating the computer device to identify hardware of the computing device and providing one or more driver modules to the authentication module for communicating with said hardware independently of said operating system.

The method may further comprise securely encoding the encryption key in an encryption key store in the non-volatile memory of the computing device, wherein the encryption key is accessible to the authentication module upon authenticating the user.

According to another aspect of the present invention, there is provided a computing device comprising:
a processor;
a touch-screen user input device;
a volatile memory; and,
a non-volatile memory encoding an encryption system and an encrypted operating system, the encryption system including computer program code executable by the processor to operate the encrypted operating system on the computing device, and including:
   computer program code executable by the processor to provide a pre-operating system; and,
   encrypted computer program code executable by the processor when decrypted to operate a start-up module,
   wherein the pre-operating system is executable by the processor on start-up of the computing device and is configured to receive user inputs for authenticating the user via the touch-screen user input device, the pre-operating system including computer program code executable by the processor for authenticating the user in dependence on the user inputs and, upon authentication, for block-decrypting the encrypted start-up module into volatile memory for booting of the encrypted operating system on the computing device.

The computing device may comprise a tablet computing device (dockable or stand-alone) or a smartphone or some other form of computing device having its operating system stored in non-volatile memory such as flash memory.

The computing device preferably further comprises an encryption key store in the non-volatile memory, the encryption key store securely encoding said encryption key and being arranged to make accessible the encryption key to said pre-operating system upon authenticating the user.

The start-up module may include a kernel mode filter driver executable by the processor for providing encryption and decryption of read and write operations between the computing device and the encrypted operating system

In one embodiment, an encryption system for a computing device has an encrypted operating system, the encryption system including a pre-operating system and an encrypted start-up module, the pre-operating system being arranged to be executed on start-up of the computing device and configured to receive user inputs for authenticating the user, the pre-operating system being arranged to authenticate the user in dependence on the user inputs and, upon authentication, block-decrypt the encrypted start-up module into volatile memory of the computing device, the pre-operating system environment being further configured to cause execution of the decrypted start-up module from volatile memory and, upon execution, the decrypted start-up module being configured to provide a filter for encryption and decryption of read and write operations between the computing device and the encrypted operating system and to cause booting of the encrypted operating system.

The encryption system is preferably encoded in non-volatile memory such as flash memory. Optionally, the encryption system and encrypted operating system may be encoded in a common non-volatile memory.

Preferably, the block decryption is performed as a contiguous operation.

### Brief Description of the Drawings

Embodiments of the present invention will now be described by way of example only with reference to the accompanying drawings in which:
Figure 1 is a schematic diagram of components of an encryption system according to an embodiment of the present invention;
Figure 2 is a schematic diagram of a device including the encryption system of Figure 1 according to an embodiment of the present invention; and,
Figure 3 is a flow diagram of a method of encrypting a device according to an embodiment of the present invention.

### Detailed Description

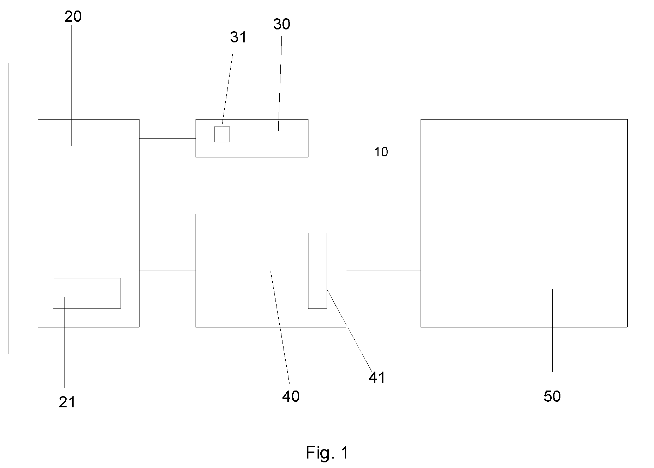

Figure 1 is a schematic diagram of components of an encryption system according to an embodiment of the present invention.

The system 10 includes a pre-operating system environment 20, an encryption key store 30 and an encrypted start-up module 40. The system is configured to communicate with an encrypted operating system 50 which may be provided as part of the system, created during installation from a non-encrypted operating system that may ship with the device, or may be provided separately (such as by a business's IT support department as a company approved operating system image). These may all be encoded in a common data repository or may be separated across two or more data repositories. Preferably, one or more of the data repositories is or includes a flash memory.

The pre-operating system environment includes an authentication component 21 that is configured to receive user inputs for the capture and processing of user credentials. The user credentials are used to recover an encryption key 31 stored in the encryption key store 30.

The pre-operating system environment 20 then uses the recovered key 31 to perform block decryption of the start-up module 40 into volatile memory, following which the start-up module is executed from volatile memory. As part of its execution, the start-up module 40 generates a full stack of kernel mode filter drivers 41 to support subsequent access of the encrypted operating system 50 using the recovered key for encryption/decryption of subsequent read/write file operations to the encrypted operating system 50.

The start-up module is preferably decrypted using AES block decryption, although other types of block encryption could be used including RSA block decryption.

It will be appreciated that the operating system may be encrypted using a different encryption scheme (and optionally need not be block-decryptable) to the start-up module.

The start-up module is preferably decrypted and chain-loaded as a contiguous operation. It will be appreciated that the start-up module and operating system could be encrypted using different keys, each of which could be retrieved at the appropriate time from the key store 30.

In operation, embodiments of the present invention avoid exposure of an unencrypted portion of the operating system. User authentication is performed in the pre-operating system environment that recovers an encryption key. After loading and executing the operating system start-up routines, the key is then made available within a filter-driver model, such that all subsequent disk reads and writes are filtered to include an encrypt or decrypt operation.

A boot process is initiated by firmware, which loads the boot-loader. This allows the authentication component 21 within the pre-operating system environment 20 to load and execute the operating system loader (start-up module). The operating system loader then continues to access the disk using the kernel mode drivers which include an encrypting filter driver.

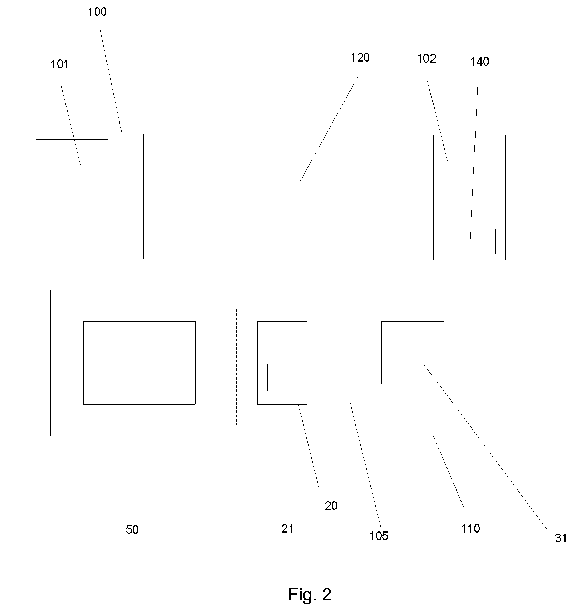

Figure 2 is a schematic diagram of a device 100 including the encryption system 110 of Figure 1 according to an embodiment of the present invention. The device 100 includes volatile memory 102 and a processor 101 configured to execute the encryption system 110 which may itself be implemented in computer program code, a programmed logic device such as a field programmable gate array or some other software, logic or hardware device or combination thereof.

The system 110 allows complete encryption of an operating system on a flash based device 100. A pre-operating system environment 20 is introduced into system firmware of the device 100 in its flash (non-volatile) memory store 105. The authentication component 21 is configured to interact via system hardware such as a touch screen interface 120 with a user, allowing the capture and processing of user credentials, and the recovery of an encryption key 31 stored in the non-volatile memory 105 for use in subsequently decrypting the encrypted operating system 50.

The firmware is configured to provide support for cryptographic processing. The pre-operating system environment is responsible for pre-operating system authentication and decryption of the encrypted operating system. As BIOS interrupts are not available as would be the case on a conventional disk-based computer system, the pre-operating system environment performs block decryption of the operating system start-up components into volatile memory, typically as a contiguous operation, following which the start-up routines are executed from volatile memory. Consequently, subsequent access to non-volatile memory is not required by the operating system start-up routines until the routines have chain-loaded and generated a full stack of kernel mode filter drivers to support subsequent access of the non-volatile memory. The operating system loader also initiates a kernel mode filter component 140 which is part of the encryption system 110 and is operable from volatile memory to decrypt/encrypt subsequent read and write operations, respectively, to the non-volatile (flash) memory. The kernel mode filter component 140 operates transparently to the user and the operating system.

In operation, embodiments of the present invention avoid exposure of an unencrypted portion of the operating system. User authentication is performed in a pre-operating system environment that recovers an encryption key. After loading and executing the operating system start-up routines, the key is then made available within a filter-driver model, such that all subsequent disk reads and writes are filtered to include an encrypt or decrypt operation.

A boot process is initiated by firmware, which loads the boot-loader. This allows the authentication component within the pre-operating system environment to load and execute the operating system loader. The operating system loader then continues to access the disk using the kernel mode drivers which include an encrypting filter driver.

As the pre-operating system environment exists in unencrypted form within volatile memory, a sequence of integrity checks are preferably performed using cryptographic hash values that measure the state of the pre-operating system environment. An initial integrity check occurs within the pre-operating system environment, which is then replicated by application components accessing encrypted forms of the hash values within the operating system.

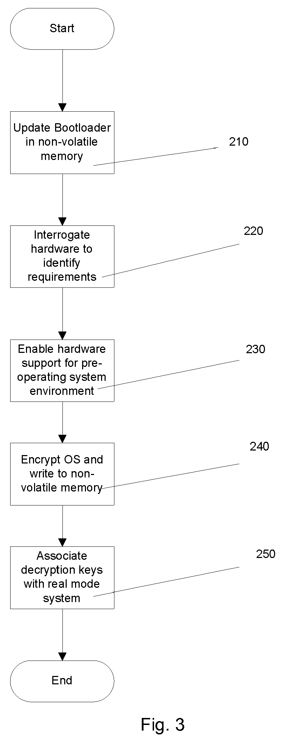

Figure 3 is a flow diagram of a method of encrypting a device according to an embodiment of the present invention.

The device has an operating system and bootloader stored in non-volatile memory. In step 210, bootloader is updated or overwritten in the non-volatile memory. The changed bootloader includes a pre-operating system environment that supports encryption and decryption operations.

In step 220, the hardware and operating system of the device is then interrogated in order to identify hardware support requirements such as a digitiser driver for a touch screen interface. System components to support identified hardware support requirements are obtained and enabled (or enabled if already present) in the pre-operating system environment in step 230.

In step 240, the operating system is retrieved from the device and encrypted by an encryption key before being re-written to the non-volatile memory of the device.

A decryption key or similar tokens are then associated with the pre-operating system environment in step 250 to enable the system to decrypt the operating system upon successful authentication by a user.

It is to be appreciated that certain embodiments of the invention as discussed below may be incorporated as code (e.g., a software algorithm or program) residing in firmware and/or on computer useable medium having control logic for enabling execution on a computer system having a computer processor.

Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention which is defined by the recitations in the claims below.

## Claims

1. An encryption system (10) for a non-volatile memory based computing device having an encrypted operating system (50), the encryption system (10) including a pre-operating system (20) and an encrypted start-up module (40), the pre-operating system (20) being arranged to be executed on start-up of the computing device and configured to receive user inputs for authenticating the user, the pre-operating system (20) being arranged to authenticate the user in dependence on the user inputs and, upon authentication, block-decrypt the encrypted start-up module (40) as a contiguous operation into volatile memory of the computing device, the pre-operating system (20) being further configured to cause execution of the decrypted start-up module (40) from volatile memory for booting of the encrypted operating system (50) on the computing device, during execution the start-up module (40) generating a full stack of kernel mode filter drivers (41) to support subsequent access of the encrypted operating system (50).

2. The encryption system of claim 1 wherein, the full stack of kernel mode filter drivers (41) of the decrypted start-up module (40) are configured to provide a filter for encryption and decryption of read and write operations between the computing device and the encrypted operating system (50).

3. The encryption system of claim 2, wherein the full stack of kernel mode filter drivers (41) comprises one or more kernel mode filter drivers arranged to operate transparently to the user and the operating system.

4. The encryption system of claim 1, 2 or 3, wherein the encryption system (10) is encoded in a non-volatile memory of the computing device.

5. The encryption system of any of claim 1 to 4, wherein the encrypted operating system (50) is encoded in a non-volatile memory of the computing device.

6. The encryption system of claim 1, 2 or 3, wherein the encryption system (10) and encrypted operating system (50) are encoded in a common non-volatile memory.

7. The encryption system of claim 2, 3, 4 or 5, wherein the non-volatile memory comprises flash memory.

8. The encryption system of claim 1, wherein the pre-operating system is configured to block decrypt and chain-load the encrypted start-up module (40) as a contiguous operation

9. The encryption system of any preceding claim, wherein the pre-operating system (20) is arranged to communicate, independently of said operating system, with a touch screen of the computing device to receive one or more of said user inputs for authenticating the user.

10. The encryption system of any preceding claim, wherein the pre-operating system (20) is configured to receive user inputs on user credentials and is arranged to obtain an encryption key (31) in dependence on said user credentials for decrypting the encrypted operating system (50).

11. The encryption system of claim 10, wherein the computing device includes an encryption key store (30) in a non-volatile memory, the encryption key store (30) securely encoding said encryption key (31) and being accessible to said pre-operating system (20) in dependence on said user credentials.

12. A method of encrypting an operating system of a computing device having non-volatile memory and a volatile memory, the method comprising:
writing an encrypted start-up module (40) and a pre-operating system (20) including a non-encrypted authentication module , the non-encrypted authentication module being executable by a processor of the computing device to receive user inputs for authenticating the user, to authenticate the user in dependence on the user inputs and, upon authentication, block-decrypt the encrypted start-up module (40) as a contiguous operation into volatile memory of the computing device for execution;
encrypting the operating system (50) in dependence on an encryption key and writing the encrypted operating system to the non-volatile memory;
configuring the computing device to execute the authentication module on start-up of the computing device, wherein upon execution in volatile memory, the start-up module provides a filter driver (41) for encryption and decryption of read and write operations for the encrypted operating system (50).

13. The method of claim 12, further comprising interrogating the computing device to identify hardware of the computing device and providing one or more driver modules to the authentication module for communicating with said hardware independently of said operating system.

14. The method of claim 12 or 13, further comprising securely encoding the encryption key (31) in an encryption key store (30) in the non-volatile memory of the computing device, wherein the encryption key is accessible to the authentication module upon authenticating the user.

## Patentansprüche

1. Verschlüsselungssystem (10) für eine Computereinrichtung gestützt auf einen nichtflüchtigen Speicher mit einem verschlüsselten Betriebssystem (50), wobei das Verschlüsselungssystem (10) ein Vor-Betriebssystem (20) und ein verschlüsseltes Hochfahrmodul (40) einschließt, wobei das Vor-Betriebssystem (20) so aufgebaut ist, dass es bei dem Hochfahren der Computereinrichtung ausgeführt wird, und so konfiguriert ist, dass es Nutzereingaben zur Authentifizierung des Nutzers empfängt, wobei das Vor-Betriebssystem (20) so aufgebaut ist, dass es den Nutzer in Abhängigkeit von den Nutzereingaben authentifiziert und nach der Authentifizierung eine Blockentschlüsselung des verschlüsselten Hochfahrmoduls (40) als eine fortlaufende Operation in einen flüchtigen Speicher der Computereinrichtung vornimmt, wobei das Vor-Betriebssystem (20) außerdem so konfiguriert ist, dass es eine Ausführung des entschlüsselten Hochfahrmoduls (40) aus dem flüchtigen Speicher zum Booten des verschlüsselten Betriebssystems (50) auf der Computereinrichtung veranlasst, und während der Ausführung des Hochfahrmoduls (40) einen kompletten Stapel der Filtertreiber (41) des Systemkerns erzeugt, um einen anschließenden Zugriff auf das verschlüsselte Betriebssystem (50) zu unterstützen.

2. Verschlüsselungssystem nach Anspruch 1, in welchem der komplette Stapel der Filtertreiber (41) des Systemkerns des entschlüsselten Hochfahrmoduls (40) so konfiguriert ist, dass er einen Filter zur Verschlüsselung und Entschlüsselung von Lese- und Schreiboperationen zwischen der Computereinrichtung und dem verschlüsselten Betriebssystem (50) schafft.

3. Verschlüsselungssystem nach Anspruch 2, in welchem der komplette Stapel der Filtertreiber (41) des Systemkerns ein oder mehrere Filtertreiber des Systemkerns aufweist, die so aufgebaut sind, dass sie für den Nutzer und das Betriebssystem transparent arbeiten.

4. Verschlüsselungssystem nach Anspruch 1, 2 oder 3, in welchem das Verschlüsselungssystem (10) in einem nichtflüchtigen Speicher der Computereinrichtung kodiert ist.

5. Verschlüsselungssystem nach einem der Ansprüche 1 bis 4, in welchem das verschlüsselte Betriebssystem (50) in einem nichtflüchtigen Speicher der Computereinrichtung kodiert ist.

6. Verschlüsselungssystem nach Anspruch 1, 2 oder 3, in welchem das Verschlüsselungssystem (10) und das verschlüsselte Betriebssystem (50) in einem gemeinsamen nichtflüchtigen Speicher kodiert sind.

7. Verschlüsselungssystem nach Anspruch 2, 3, 4 oder 5, in welchem der nichtflüchtige Speicher einen Flash-Speicher aufweist.

8. Verschlüsselungssystem nach Anspruch 1, in welchem das Vor-Betriebssystem so konfiguriert ist, dass es eine Entschlüsselung blockiert und eine Reihenladung des verschlüsselten Hochfahrmoduls (40) als eine fortgesetzte Operation durchführt.

9. Verschlüsselungssystem nach einem der vorstehenden Ansprüche, in welchem das Vor-Betriebssystem (20) so aufgebaut ist, dass es unabhängig von dem Betriebssystem mit einem Berührungsbildschirm der Computereinrichtung kommuniziert, um eine oder mehrere der Nutzereingaben zur Authentifizierung des Nutzers zu empfangen.

10. Verschlüsselungssystem nach einem der vorstehenden Ansprüche, in welchem das Vor-Betriebssystem (20) so konfiguriert ist, dass es Nutzereingaben zu Nutzerberechtigungsnachweisen empfängt, und so aufgebaut ist, dass es eine Verschlüsselungskodierung (31) in Abhängigkeit von den Nutzerberechtigungsnachweisen zum Entschlüsseln des verschlüsselten Betriebssystems (50) erhält.

11. Verschlüsselungssystem nach Anspruch 10, in welchem die Computereinrichtung einen Verschlüsselungskodierungsspeicher (30) in einem nichtflüchtigen Speicher einschließt, wobei der Verschlüsselungskodierungsspeicher (30) die Verschlüsselungskodierung (31) sicher kodiert und für das Vor-Betriebssystem (20) in Abhängigkeit von den Nutzerberechtigungsnachweisen zugänglich ist.

12. Verfahren zum Verschlüsseln eines Betriebssystems einer Computereinrichtung mit einem nichtflüchtigen Speicher und einem flüchtigen Speicher, wobei das Verfahren aufweist:
Das Schreiben eines verschlüsselten Hochfahrmoduls (40) und eines Vor-Betriebssystems (20) einschließend ein nicht verschlüsseltes Authentifizierungsmodul, wobei das nicht verschlüsselte Authentifizierungsmodul durch einen Prozessor der Computereinrichtung zum Empfangen von Nutzereingaben zur Authentifizierung des Nutzers ausführbar ist, um den Nutzer in Abhängigkeit von den Nutzereingaben zu authentifizieren und nach einer Authentifizierung das verschlüsselte Hochfahrmodul (40) als eine fortgesetzte Operation in den flüchtigen Speicher der Computereinrichtung zur Ausführung zu blockentschlüsseln;
Verschlüsseln des Betriebssystems (50) in Abhängigkeit von einer Verschlüsselungskodierung und Schreiben des verschlüsselten Betriebssystems in den nichtflüchtigen Speicher;
Konfigurieren der Computereinrichtung zum Ausführen des Authentifizierungsmoduls beim Hochfahren der Computereinrichtung, wobei nach Ausführung im flüchtigen Speicher das Hochfahrmodul einen Filtertreiber (41) zum Verschlüsseln und Entschlüsseln von Lese- und Schreiboperationen für das verschlüsselte Betriebssystem (50) zur Verfügung stellt.

13. Verfahren nach Anspruch 12, außerdem aufweisend das Befragen der Computereinrichtung zum Identifizieren von Hardware der Computereinrichtung und zum zur Verfügung stellen von einem oder mehreren Treibermodulen für das Authentifizierungsmodul zum Kommunizieren mit der Hardware unabhängig von dem Betriebssystem.

14. Verfahren nach Anspruch 12 oder 13, außerdem aufweisend das sichere Kodieren der Verschlüsselungskodierung (31) in einem Verschlüsselungskodierungsspeicher (30) in dem flüchtigen Speicher der Computereinrichtung, wobei die Verschlüsselungskodierung für das Authentifizierungsmodul nach einer Authentifizierung des Nutzers zugänglich ist.

## Revendications

1. Un système de cryptage (10) pour une mémoire rémanente formant la base d'un dispositif de calcul ayant un système d'exploitation crypté (50), le système de cryptage (10) incluant un système de pré-exploitation (20) et un module de démarrage crypté (40), le système de pré-exploitation (20) étant agencé pour être exécuté au démarrage du dispositif de calcul et configuré pour recevoir des entrés d'un utilisateur pour authentifier l'utilisateur, le système de pré-exploitation (20) étant agencé pour authentifier l'utilisateur en fonction des entrés d'un utilisateur et, sur authentification, décryptage en bloc du module de démarrage crypté (40) comme une opération contigüe dans la mémoire volatile du dispositif de calcul, le système de pré-exploitation (20) étant en plus configuré pour provoquer l'exécution du module de démarrage décrypté (40) depuis la mémoire volatile pour l'initialisation du système d'exploitation crypté (50) sur le dispositif de calcul, durant l'exécution du module de démarrage (40) générant une totalité des pilotes de filtrage de mode noyau (41) pour supporter un accès ultérieur du système d'exploitation crypté (50).

2. Le système de cryptage de la revendication 1 dans lequel, la totalité des pilotes de filtrage de mode noyau (41) du module de démarrage décrypté (40) sont configurés pour fournir un filtre pour le cryptage et le décryptage des opérations de lecture et d'écriture entre le dispositif de calcul et le système d'exploitation crypté (50).

3. Le système de cryptage de la revendication 2, dans lequel la totalité des pilotes de filtrage de mode noyau (41) comprend un ou plusieurs des pilotes de filtrage de mode noyau agencé pour opérer de manière transparente pour l'utilisateur et le système d'exploitation (50).

4. Le système de cryptage de la revendication 1, 2 ou 3, dans lequel le système de cryptage (10) est encodé dans une mémoire rémanente du dispositif de calcul.

5. Le système de cryptage de la revendication 1 à 4, dans lequel le système d'exploitation crypté (50) est encodé dans une mémoire rémanente du dispositif de calcul.

6. Le système de cryptage des revendications 1, 2, ou 3, dans lequel le système de cryptage (10) et le système d'exploitation crypté (50) sont encodés dans une mémoire rémanente commune.

7. Le système de cryptage de la revendication 2, 3, 4 ou 5 dans lequel la mémoire rémanente comprend une mémoire flash.

8. Le système de cryptage de la revendication 1, dans lequel le système de pré-exploitation est configuré pour décrypter en bloc et charger en chaine le module de démarrage crypté (40) comme une opération contiguë.

9. Le système de cryptage de l'une quelconque des revendications précédentes, dans lequel le système de pré-exploitation (20) est agencé pour communiquer, indépendamment dudit système d'exploitation avec un écran tactile du dispositif de calcul pour recevoir une ou plus desdites entrés d'utilisateur pour authentifier l'utilisateur.

10. Le système de cryptage de l'une quelconque des revendications précédentes, dans lequel le système de pré-exploitation (20) est configuré pour recevoir des entrés d'utilisateur sur les justificatifs d'identité et est agencé pour obtenir une clé de cryptage (31) en fonction desdits justificatifs d'identité pour décrypter le système d'exploitation crypté (50).

11. Le système de cryptage de la revendication 10, dans lequel le dispositif de calcul inclue un stockage de la clé de cryptage (30) dans une mémoire rémanente, le stockage de la clé de cryptage (30) en encodant de manière sécurisée ladite clé de cryptage (31) et en étant accessible audit système de pré-exploitation (20) en fonction desdits justificatifs d'identité.

12. Une méthode de cryptage sur un système d'exploitation d'un dispositif de calcul ayant une mémoire rémanente et une mémoire volatile, la méthode comprenant :
écriture d'un module de démarrage crypté (40) et un système de pré-exploitation (20) incluant un module d'authentification non crypté, le module d'authentification non crypté étant exécutable par un processeur du dispositif de calcul pour recevoir les entrées d'utilisateur pour authentifier l'utilisateur, pour authentifier l'utilisateur en fonction des entrées d'utilisateur et, sur authentification, décrypter en bloc du module de démarrage crypté (40) comme une opération contiguë dans la mémoire volatile du dispositif de calcul pour exécution ; cryptage du système d'exploitation (50) en fonction d'une clé de cryptage et écriture du système d'exploitation crypté vers la mémoire rémanente ; configuration du dispositif de calcul pour exécuter le module d'authentification au démarrage du dispositif de calcul, dans lequel, une fois l'exécution dans la mémoire volatile, le module de démarrage fournit un pilote de filtrage (41) pour le cryptage et le décryptage d'opération de lecture de d'écriture pour le système d'exploitation crypté (50).

13. La méthode de la revendication 12, comprenant en plus l'interrogation du dispositif de calcul pour identifier le matériel du dispositif de calcul et la fourniture d'un ou plusieurs modules pilotes au module d'authentification pour communiquer avec ledit matériel indépendamment dudit système d'exploitation.

14. La méthode de la revendication 12 ou 13, comprenant en plus l'encodage sécurisé de la clé de cryptage (31) dans un stockage de la clé de cryptage (30) dans la mémoire rémanente du dispositif de calcul, dans lequel la clé de cryptage est accessible au module d'authentification sur l'authentification de l'utilisateur.
